# EUROPÄISCHE PATENTSCHRIFT

(11) **EP 4 086 152 B1**
(45) Veröffentlichungstag und Bekanntmachung des Hinweises auf die Patenterteilung: **31.12.2025**
(21) Anmeldenummer: 21172712.8
(22) Anmeldetag: 07.05.2021
(51) Int. Cl.: B62M 6/55

(54) **ELEKTROFAHRRAD-MITTELMOTOR-ANTRIEBSEINHEIT UND EINE BEFESTIGUNGSANORDNUNG FÜR EINE ELEKTROFAHRRAD-MITTELMOTOR-ANTRIEBSEINHEIT**
ELECTRIC BICYCLE MID-ENGINE DRIVE UNIT AND MOUNTING ARRANGEMENT FOR AN ELECTRIC BICYCLE MID-ENGINE DRIVE UNIT
UNITÉ D'ENTRAÎNEMENT À MOTEUR CENTRAL DE BICYCLETTE ÉLECTRIQUE ET AGENCEMENT DE FIXATION POUR UNE UNITÉ D'ENTRAÎNEMENT À MOTEUR CENTRAL DE BICYCLETTE ÉLECTRIQUE

(43) Veröffentlichungstag der Anmeldung: 09.11.2022
(73) Patentinhaber: SRAM, LLC, Chicago, IL 60607 (US)
(72) Erfinder: Vargovics, Otto, 41460 Neuss (DE)
(74) Vertreter: terpatent PartGmbB

(56) Entgegenhaltungen:
- EP-A1- 3 766 772
- CN-U- 207 450 132
- KR-A- 20150 100 445

## Beschreibung

Die Erfindung bezieht sich auf eine Elektrofahrrad-Mittelmotor-Antriebseinheit bzw. auf eine Fahrradrahmen-Befestigungsanordnung zur Befestigung der Antriebseinheit an einem Fahrradrahmen.

Unter einem Elektrofahrrad ist vorliegend jeder Fahrradtyp zu verstehen, der eine unterstützende elektrische Antriebseinheit aufweist, die die von einer Fahrerperson in eine Tretlagerwelle eingeleitete humane Antriebsleistung durch eine entsprechende elektromotorische Antriebsleistung ergänzt, soweit dies gewünscht ist. Die vorliegende Erfindung bezieht sich auf die Befestigung einer sogenannten Mittelmotor-Antriebseinheit, die sowohl die Tretkurbelwelle rotatorisch lagert als auch eine Abtriebswelle aufweist. Die Abtriebswelle treibt über ein Abtriebselement, beispielsweise ein Kettenblatt, ein Hinterrad des Elektrofahrrads an. Bei einer Mittelmotor-Antriebseinheit können über die Tretlagerwelle und die Abtriebswelle kurzzeitig sehr hohe mechanische Kräfte auf die Antriebseinheit einwirken, die durch die Befestigungsanordnung auf den Fahrradrahmen übertragen werden müssen.

Aus DE 60 2018 212 509 A1 ist eine Elektrofahrrad-Mittelmotor-Antriebseinheit bekannt, die durch zwei Spannmuttern axial auf eine vertikale Gehäusewand eines rahmenseitigen Aufnahmegehäuses gedrückt wird, sodass hierdurch an der einen vertikalen Gehäusewand eine kraftschlüssige Verbindung zwischen dem Antriebsgehäuse und dem rahmenseitigen Aufnahmegehäuse hergestellt wird. Auf diese Weise werden die meisten zu übertragenden Kräfte relativ großflächig und gleichzeitig in großer Nähe zu der Tretlagerwelle und der Abtriebswelle übertragen, so dass das Antriebsgehäuse in seinen übrigen Bereichen keine hohen Tragqualitäten aufweisen muss.

Da die zwischen der Antriebseinheit und dem Fahrradrahmen zu übertragenden Kräfte eine große Kraftkomponente aufweisen, die in der Elektrofahrrad-Längsebene liegt, müssen für die kraftschlüssige Verbindung allerdings sehr hohe Normalkräfte durch die beiden Spannmuttern generiert werden. Dennoch kann unter extremen Bedingungen nicht zuverlässig verhindert werden, dass eine unerwünschte Bewegung oder eine Lockerung der Antriebseinheit in der Antriebsaufnahme auftreten kann.

Aus EP 3 766 772 A1 ist eine Elektrofahrrad-Mittelmotor-Antriebseinheit offenbart, die an ihrem Antriebsgehäuse beidseitig jeweils einen kreisringförmigen Radialklemmring aufweist. Zur Drehmomentabstützung wird eine Schraubverbindung vorgeschlagen. EP 3 766 772 A1 offenbart alle Merkmale des Oberbegriffs von Anspruch 1.

Aufgabe der Erfindung ist es demgegenüber, eine Elektrofahrrad-Mittelmotor Antriebseinheit und eine Befestigungsanordnung hierfür mit verbesserten Kraftübertragungs- Eigenschaften zwischen der Antriebseinheit und der rahmenseitigen Befestigungsanordnung zu schaffen.

Diese Aufgabe wird erfindungsgemäß gelöst mit einer Elektrofahrrad-Mittelmotor-Antriebseinheit mit den Merkmalen des Anspruchs 1 bzw. mit einer Elektrofahrrad-Mittelmotor-Befestigungsanordnung gemäß Anspruch 9 mit einem Fahrradrahmen mit einer rahmenseitigen Mittelmotor-Aufnahmeanordnung und der Antriebseinheit gemäß einem der sich auf die Antriebseinheit beziehenden Ansprüche.

Die erfindungsgemäße Elektrofahrrad-Mittelmotor-Antriebseinheit weist ein Antriebsgehäuse auf, durch das eine das Antriebsgehäuse in Querrichtung durchdringende Tretlagerwelle und eine hierzu parallel gelagerte Abtriebswelle drehbar gelagert sind. Vorzugsweise sind die Tretlagerwelle und die Abtriebswelle koaxial zueinander gelagert. Die Abtriebswelle durchdringt das Antriebsgehäuse nur einseitig, in der Regel auf der linken Lateralseite bezogen auf die Fahrtrichtung des Elektrofahrrads. Dem Antriebsgehäuse ist an mindestens einer Lateralseite der Antriebseinheit und koaxial zu der Tretlager-Axialen ein im Wesentlichen kreisringförmiger Radialklemmring zugeordnet, wobei der Radialklemmring eine zirkuläre Außen-Klemmfläche aufweist. Die Außen-Klemmfläche ist dazu ausgebildet, eine radiale Klemmverbindung mit einer korrespondierenden zirkulären rahmenseitigen Innen-Klemmfläche einzugehen. Eine der beiden Klemmflächen, entweder die Außen-Klemmfläche oder die Innen-Klemmfläche, besonders bevorzugt beide Klemmflächen, ist bzw. sind leicht konisch ausgebildet.

Die Richtungsangaben beziehen sich, wenn nicht anders angegeben, auf ein Elektrofahrrad, das auf einer Horizontalebene steht. Eine Lateralseite ist demnach die rechte oder die linke Seite des Elektrofahrrads.

Die Kraftübertragung zwischen dem Antriebsgehäuse und dem Fahrradrahmen bzw. der Aufnahmeanordnung des Fahrradrahmens erfolgt in der unmittelbaren Nähe zu der Tretlagerwelle und gegebenenfalls der hierzu gegebenenfalls koaxialen Abtriebswelle. Das Antriebsgehäuse kann daher in den übrigen Bereichen relativ filigran konstruiert sein, da das Antriebsgehäuse in den übrigen Bereichen lediglich noch über eine Drehmomentstütze relativ geringe Kräfte auf die rahmenseitige Mittelmotor-Aufnahmeanordnung des Fahrradrahmens übertragen muss.

An dem Antriebsgehäuse ist eine separate Drehmomentstütze vorgesehen, die nicht von dem Radialklemmring selbst gebildet ist. Durch das Vorsehen einer separaten Drehmomentstütze wird die Übertragung eines (hohen) Drehmoments durch den Radialklemmring erheblich reduziert, sodass auf diese Weise auch eine Lockerung bzw. ein Verrutschen des Radialklemmrings in der korrespondierenden rahmenseitigen Mittelmotor-Aufnahmeanordnung zuverlässig verhindert wird.

Der Hebelarm der separaten Drehmomentstütze entspricht im Verhältnis zu der Tretlager-Axialen mindestens dem 1,5-fachen des Radius' des Radialklemmrings bzw. seiner Außen-Klemmfläche zu der Tretlager-Axialen. Besonders bevorzugt ist die Drehmomentstütze bolzenartig ausgebildet, wobei die Bolzen-Axiale parallel zur Tretlager-Axialen angeordnet ist. Hierdurch kann die Drehmomentstütze bereits an der Antriebseinheit vorgesehen sein, bevor die Antriebseinheit in die rahmenseitige Mittelmotor-Aufnahmeanordnung in horizontaler Elektrofahrrad-Querrichtung eingesetzt wird. Ferner werden auf diese Weise sowohl die von dem Radialklemmring als auch die von der Drehmomentstütze übertragenden Kräfte vorzugsweise auf dieselbe Seitenwand der rahmenseitigen Mittelmotor-Aufnahmeanordnung übertragen. Hierdurch wird sowohl ein relativ leichtes Antriebsgehäuse als auch eine relativ leichte rahmenseitige Aufnahmeanordnung ermöglicht.

Vorzugsweise ist die Außen-Klemmfläche als Außenkonus ausgebildet. Der Konuswinkel des Außenkonus' zur Tretlager-Axialen ist größer als 0,5° und beträgt vorzugsweise weniger als 20°, besonders bevorzugt weniger als 12°. Mit der zirkulären Außen-Klemmfläche des Radialklemmrings kann das Antriebsgehäuse in eine korrespondierende Innen-Klemmfläche einer Aufnahmeanordnung des Fahrradrahmens selbstzentrierend eingespannt werden. Da die Außen-Klemmfläche des Radialklemmrings in einem relativ kleinen Winkel zur Tretlager-Axialen bzw. zu einer hierzu parallelen Zylinderfläche geneigt ist, erfolgt ein großer Teil der Kraftübertragung senkrecht zu der Klemmfläche, und zwar über einen großen Teil des Gesamtumfangs der zirkulären Klemmfläche.

Besonders bevorzugt weist die Drehmomentstütze eine Spannhülse auf, deren Außenumfang zum Verspannen in einer korrespondierenden Stützbohrung der rahmenseitigen Mittelmotor-Aufnahmeanordnung einstellbar ist. Besonders bevorzugt ist die Spannhülse elastisch bzw. besteht die Spannhülse aus einem gummielastischen Material, sodass sich die Spannhülse bei Verspannung der Spannhülse in axialer Richtung der Spannhülse radial außen ausdehnt. Die elastische Spannhülse überträgt ferner praktisch keinen Körperschall.

Grundsätzlich kann der Radialklemmring jedenfalls an einer Lateralseite des Antriebsgehäuses einstückig an dem Antriebsgehäuse vorgesehen sein. Vorzugsweise wird jedoch mindestens ein Radialklemmring, besonders bevorzugt zwei Radialklemmringe, jeweils von einer separaten Klemmmutter gebildet, die mit ihrem Mutterngewinde in ein korrespondierendes Gegengewinde des Antriebsgehäuses axial eingeschraubt ist. Vorzugsweise ist das Mutterngewinde ein Innengewinde, das auf ein als Außengewinde ausgebildetes Gegengewinde des Antriebsgehäuses aufgeschraubt ist. Besonders bevorzugt weist der Radialklemmring eine lateral zugängliche Werkzeugansatz-Struktur zum Ansetzen eines entsprechenden Montagewerkzeugs zum Drehen der Klemmmutter auf. Die Werkzeugansatz-Struktur kann beispielsweise kronenartig ausgebildet sein.

Vorzugsweise ist innerhalb des Antriebsgehäuses ein elektrischer Antriebsmotor angeordnet, dessen Motorwelle parallel zur Tretlager-Axialen angeordnet ist, und dessen Motorwelle näher an der Drehmomentstützen-Axialen als an der Tretlager-Axialen angeordnet ist. Besonders bevorzugt ist der Antriebsmotor an derselben Seitenwand des Antriebsgehäuses fixiert, die auch die Drehmomentstütze aufweist und/oder aus der die Abtriebswelle aus dem Antriebsgehäuse heraustritt.

Die erfindungsgemäße Elektrofahrrad-Mittelmotor-Befestigungsanordnung setzt sich aus einem Fahrradrahmen mit einer rahmenseitigen Mittelmotor-Aufnahmeanordnung und der Elektrofahrrad-Mittelmotor-Antriebseinheit zusammen, die die Merkmale eines sich auf die Antriebseinheit beziehenden Anspruchs aufweist. Die Befestigungsanordnung weist einen einstückig mit dem übrigen Fahrradrahmen und im Wesentlichen topfartig ausgebildeten Aufnahme-Grundkörper auf, der durch einen separaten Gehäusedeckel verschlossen ist. Der Aufnahme-Grundkörper ist ein unmittelbar tragender Teil des Fahrradrahmens, wohingegen der Gehäusedeckel nur mittelbar ein tragender Teil des Fahrradrahmens ist. Der Gehäusedeckel und die Topf-Bodenwand des topfartigen Aufnahme-Grundkörpers bilden die vertikalen Seitenwände der Aufnahmeanordnung, die jeweils eine Klemmöffnung mit einer im Wesentlichen zirkulären Innen-Klemmfläche aufweisen, in der jeweils die Außen-Klemmfläche des zugeordneten antriebsseitigen Radialklemmrings sitzt. Besonders bevorzugt ist an beiden Lateralseiten des Antriebsgehäuses jeweils ein separater Radialklemmring vorgesehen, der jeweils in eine korrespondierende Klemmöffnung bzw. in die zirkuläre Innen-Klemmfläche klemmend eingespannt ist. Grundsätzlich spielt es keine Rolle, ob die Innen-Klemmfläche oder alternativ die Außen-Klemmfläche oder aber beide Klemmflächen jeweils konusförmig ausgebildet sind. Jedenfalls sind die korrespondierenden Klemmflächen derart ausgebildet, dass sich bei Einpressen der Innen-Klemmfläche in die korrespondierende Außen-Klemmfläche eine radiale Verklemmung ergibt.

Vorzugsweise wird die Innen-Klemmfläche der Aufnahmeanordnung von einem separaten Gegen-Klemmring gebildet, der aus einem anderen Material besteht, als der Aufnahme-Grundkörper bzw. der Gehäusedeckel. Als Material für den Gegen-Klemmring kommt insbesondere Kunststoff in Frage, der unter Druck ausreichend formstabil ist, jedoch keinen bzw. nur wenig Körperschall von dem Antriebsgehäuse auf die Aufnahmeanordnung des Fahrradrahmens überträgt. Grundsätzlich kann alternativ ein entsprechender Kunststoff-Ring die zirkuläre Außen-Klemmfläche der Antriebseinheit bilden.

Besonders bevorzugt ist die Abtriebswelle koaxial zur Tretlagerwelle angeordnet, und ragt die Abtriebswelle durch die Klemmöffnung des Aufnahme-Grundkörpers zur Gehäuseaußenseite hindurch. Durch die Klemmöffnung des Aufnahme-Grundkörpers ragt also sowohl ein Längsende der Tretlagerwelle als auch die koaxiale Abtriebswelle hindurch. Der größte Teil aller von der Antriebseinheit auf die Aufnahmeanordnung übertragenen Kräfte wird also über den Aufnahme-Grundkörper übertragen, nicht über den separaten Aufnahme-Gehäusedeckel.

Vorzugsweise weist der Aufnahme-Grundkörper eine Drehmomentstützen-Aufnahmeöffnung auf, durch die bzw. in der die antriebsseitige Drehmomentstütze abgestützt ist. Auch die durch die Drehmomentstütze von der Antriebseinheit auf die Aufnahmeanordnung übertragenden Kräfte werden also über den Aufnahme-Grundkörper übertragen, und nicht über den separaten Aufnahme-Gehäusedeckel. Der Gehäusedeckel muss daher im Wesentlichen nur die von dem anderen Längsende der Tretlagerwelle eingeleiteten Kräfte der Antriebseinheit auf den Fahrradrahmen übertragen.

Besonders bevorzugt ist vorgesehen, dass das Antriebsgehäuse einen elektrischen Antriebsmotor jedenfalls teilweise einhaust, und dass das Antriebsgehäuse einen Motortopf aufweist, der teilweise durch eine Topföffnung des Gehäusedeckels zur Gehäuseaußenseite hindurchragt. Über den Motortopf kann die Luftkühlung des Antriebsmotors innerhalb des Motortopfes direkt durch Außenluft erfolgen, die den Motortopf unmittelbar bestreicht bzw. erreicht. Besonders bevorzugt liegt der Motortopf nicht am Öffnungsrand der Topföffnung an, sondern ist derart beabstandet zu dem Öffnungsrand der Topföffnung, dass auch im Betrieb und bei Einwirkung hoher Kräfte keine unmittelbare Berührung des Antriebsgehäuse-Motortopfes mit dem Öffnungsrand stattfindet. Auch an dieser Stelle findet daher keine Übertragung von Körperschall von der Antriebseinheit auf die Aufnahmeanordnung statt.

Im Folgenden wird ein Ausführungsbeispiel der Erfindung näher erläutert. Es zeigen:
Figur 1 einen teilweisen Längsschnitt durch die zur Horizontalen geneigte Längsebene einer Elektrofahrrad-Mittelmotor-Befestigungsanordnung einschließlich einer Mittelmotor-Antriebseinheit,
Figur 2 einen vertikalen Querschnitt II-II der Befestigungsanordnung einschließlich der Antriebseinheit der Figur 1,

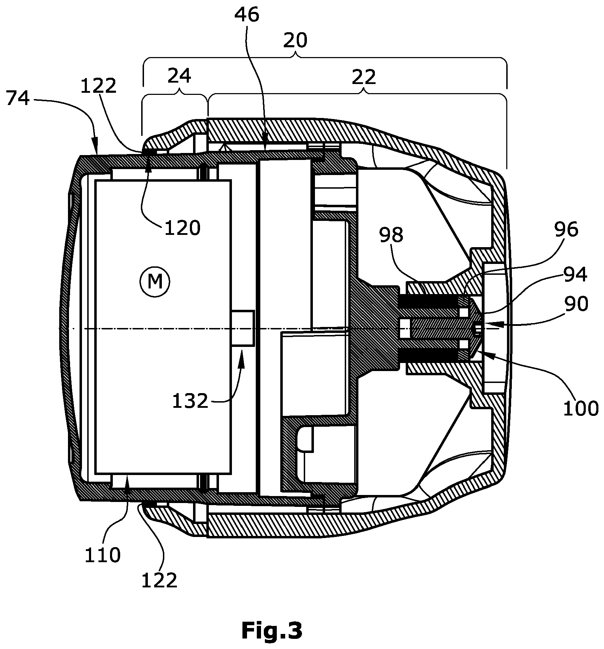

Figur 3 einen vertikalen Querschnitt III-III der Befestigungsanordnung einschließlich eines elektrischen Antriebsmotors und einer Drehmomentstütze,
Figur 4 eine Seitenansicht eines Aufnahme-Grundkörpers der Aufnahmeanordnung der Figur 1, und
Figur 5 einen Aufnahme-Deckel der Aufnahmeanordnung der Figur 1.

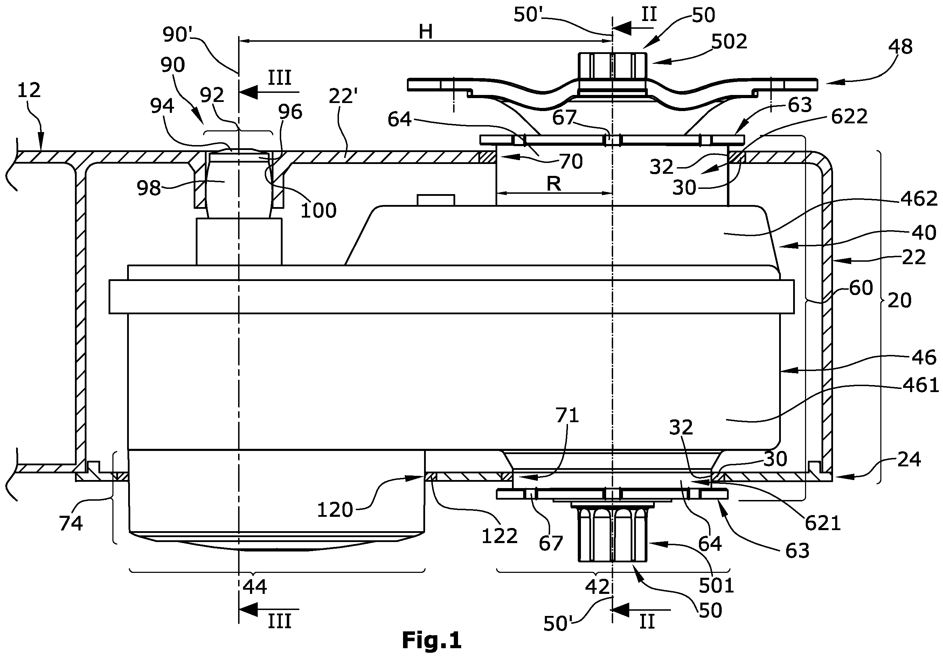

In der Figur 1 ist eine Elektrofahrrad-Mittelmotor-Befestigungsanordnung 60 einschließlich einer Antriebseinheit 40 eines Elektrofahrrads 10 dargestellt, das ein sogenanntes Pedelec ist. Die Antriebseinheit 40 ist als sogenannter Mittelmotor ausgebildet, trägt also sowohl eine Tretlagerwelle 50 als auch eine Abtriebswelle 52. Die Antriebseinheit 40 arbeitet im regulären Fahrbetrieb rein unterstützend, und unterstützt im Fahrbetrieb die humane Antriebsleistung einer Fahrerperson, die diese über zwei nicht dargestellte Tretkurbeln in die Tretlagerwelle 50 einleitet. Die gesamte Abtriebsleistung, also die Summe aus der humanen Antriebsleistung und der motorelektrischen Antriebsleistung, wird über ein mit der Abtriebswelle 52 drehfest verbundenes Abtriebszwischenelement 48 und ein daran befestigtes Abtriebselement (nicht dargestellt), beispielsweise ein Kettenblatt, über eine Kette auf das Hinterrad des Elektrofahrrads 10 übertragen.

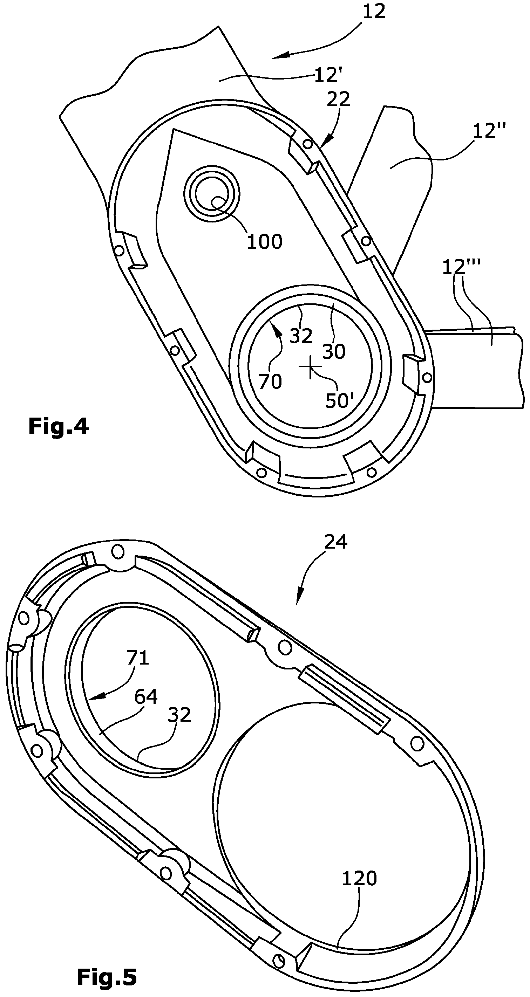

In der Figur 4 ist ein Fahrradrahmen 12 des Elektrofahrrads 10 dargestellt, wobei ein Aufnahme-Grundkörper 22 einer Mittelmotor-Aufnahmeanordnung 20 zwei Hinterradstreben 12‴, ein Sattelrohr 12" sowie ein Unterrohr 12' steif miteinander verbindet. Der Aufnahme-Grundkörper 22 sowie die übrigen Teile des Fahrradrahmens 12 bestehen aus Metall, beispielsweise aus Aluminium, können jedoch auch aus Stahl oder aus einem faserverstärkten Kunststoff bestehen. Die in der Figur 4 in Aufsicht sichtbare und in einer Vertikalebene liegende Öffnung des topfartigen Aufnahme-Grundkörpers 22 ist durch den in der Figur 5 abgenommen bzw. geöffnet dargestellten Gehäusedeckel 24 verschlossen. Auf diese Weise bilden der Aufnahme-Grundkörper 22 und der Gehäusedeckel 24 eine weitgehend geschlossene Aufnahmeanordnung 20. In der Aufnahmeanordnung 20 ist die Mittelmotor-Antriebseinheit 40 gelagert.

Die Mittelmotor-Antriebseinheit 40 weist ein aus zwei zusammenmontierten Gehäuseschalen 461,462 zusammengesetztes Antriebsgehäuse 46 auf, in dem die das Antriebsgehäuse 46 in Querrichtung durchdringende Tretlagerwelle 50 und die hierzu koaxial und parallel angeordnete Abtriebswelle 52 zueinander und zum Antriebsgehäuse 46 drehbar gelagert sind. Die Tretlagerwelle 50 und die hierzu koaxial angeordnete Abtriebswelle 52 rotieren um die Tretlager-Axiale 50'. An den beiden Längsenden der Tretlagerwelle 50 ist jeweils eine Formschlussstruktur 501,502 vorgesehen, auf die drehfest jeweils eine Pedalkurbel fixiert werden kann.

In dem Antriebsgehäuse 46 ist ferner ein elektrischer Antriebsmotor 110 sowie ein in den Figuren nicht dargestelltes Getriebe untergebracht. Die Tretlagerwelle 50 und die Abtriebswelle 52 treten an beiden Lateralseiten des Antriebsgehäuses 46 durch jeweils eine Gehäuseöffnung aus dem Antriebsgehäuse 46 heraus.

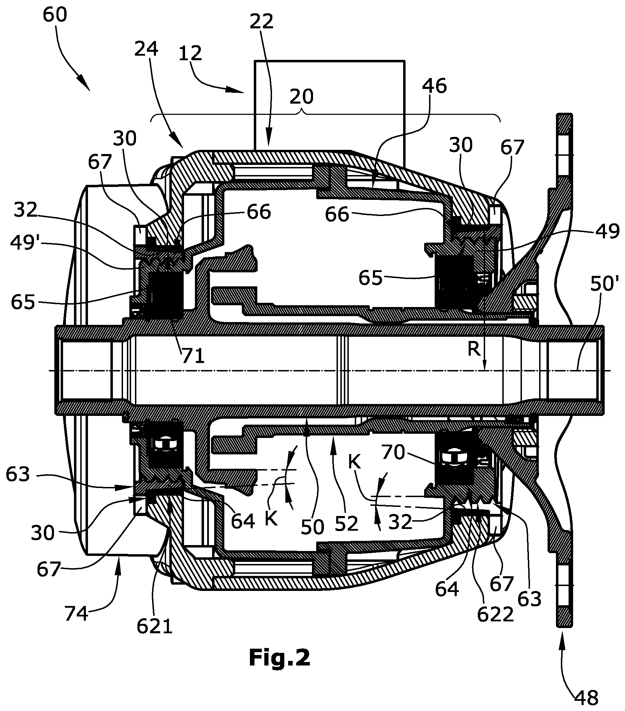

Wie in den Figuren 1 und 2 dargestellt ist, weist das Antriebsgehäuse 46 jeweils eine die Gehäuseöffnungen jeweils definierenden und umgebenden Gehäuseöffnungs-Ringflansch 49,49' auf, auf dessen Außenseite ein Gegengewinde 66 vorgesehen ist, das mit einem Muttergewinde 65 einer separaten Klemmmutter 63 gewindeartig zusammengreift. Die beiden Klemmmuttern 63 definieren auf ihren Außenseiten jeweils einen Radialklemmring 621,622, der jeweils eine zirkuläre Außen-Klemmfläche 64 aufweist, die als Außenkonus ausgebildet ist. Der Konuswinkel K des Außenkonus' bzw. der Außen-Klemmfläche 64 beträgt ca. 10° bezogen auf die Tretlager-Axiale 50'. Am Außenumfang der Klemmmuttern 63 ist jeweils eine kronenartige und lateral zugängliche Werkzeugansatz-Struktur 67 vorgesehen.

Der Aufnahme-Grundkörper 22 und der Gehäusedeckel 24 weisen jeweils eine in einer Vertikalebene liegende Klemmöffnung 70,71 mit einer zirkulären Innen-Klemmfläche 32 auf, in die die Außen-Klemmfläche 64 der beiden Radialklemmringe 621,622 jeweils klemmend fixiert ist. Im vorliegenden Ausführungsbeispiel wird die Innen-Klemmfläche 32 jeweils von einem separaten Gegen-Klemmring 30 gebildet, der aus Kunststoff besteht, und auf diese Weise die aus gegebenenfalls verschiedenen Metallen bestehenden Bauteile galvanisch voneinander trennt und die Übertragung von Körperschall von der Antriebseinheit 40 auf die Aufnahmeanordnung 20 unterbindet. Ferner wirkt der Kunststoff-Gegen-Klemmring 30 toleranzausgleichend.

Die Innen-Klemmfläche 32 kann vor der Montage der Antriebseinheit 40 in die Aufnahmeanordnung 20 zylindrisch ausgebildet sein, kann jedoch alternativ auch vor der Montage bereits als Innenkonus ausgebildet sein, also komplementär zu der Außen-Klemmfläche 64 geformt sein. Durch die plastisch-elastische Verformbarkeit des Gegen-Klemmrings 30 passt sich die Innen-Klemmfläche 32 jedoch während der Montage in jedem Fall komplementär an die korrespondierende Außen-Klemmfläche 64 an.

Das Antriebsgehäuse 46 ist, in Antriebsgehäuse-Längsrichtung betrachtet, funktional in einen Tretlager-Teil 42 und in einen Motor-Teil 44 aufgeteilt. Der Tretlager-Teil 42 des Antriebsgehäuses 46 weist die Tretlagerwelle 50 und die Abtriebswelle 52 auf, wohingegen in dem Motor-Teil 44 der elektrische Antriebsmotor 110 gelagert ist. Der Antriebsmotor 110 ist teilweise durch einen hohlzylindrischen Motortopf 74 des Antriebsgehäuses 46 eingehaust, der lateral von der rechten Seitenwand des Antriebsgehäuses 46 abragt. Im Bereich des Motortopfes 74 weist der Gehäusedeckel 24 eine kreisrunde Topföffnung 120 auf, durch die der Motortopf 74 zur Gehäuseaußenseite hindurchragt. Auf diese Weise wird ein großer Teil des Motortopfes 74 durch die Umgebungsluft und gegebenenfalls den Fahrtwind unmittelbar gekühlt. Zwischen dem Öffnungsrand der Topföffnung 120 und dem Motortopf 74 ist ein Kunststoff-Abstandshaltering 122 vorgesehen, der im Wesentlichen einen unmittelbaren Kontakt zwischen dem Antriebsgehäuse 46 und der Aufnahmeanordnung 20 verhindert.

Auf der rechten Antriebsseite weist das Antriebsgehäuse 46 in dem Motor-Teil 44 eine separate Drehmomentstütze 90 auf, die bolzenartig ausgebildet ist. Der Hebelarm H der der Bolzen-Axialen 90' der bolzenartigen Drehmomentstütze 90 zu der Tretlager-Axialen 50' beträgt das 2,5- bis 3,5-fache des Radius' R der Klemmfläche 64 des Radialklemmrings 621,622 zu der Tretlager-Axialen 50', und beträgt vorliegend ungefähr das 2,5-fache. Die Drehmomentstütze 90 wird von einer sich in einer Horizontalachse erstreckenden Spannhülsenanordnung 92 gebildet, die eine gummielastische Spannhülse 98 aufweist, die über eine Spannringscheibe 96 und eine von lateral durch ein entsprechendes Werkzeug zugängliche Spannschraube 94 in einer korrespondierenden innenzylindrischen Drehmomentstützen-Aufnahmeöffnung 100 der vertikalen linken Seitenwand 22' der Aufnahmeanordnung 20 verspannt ist.

Die Motorwelle 132 des Antriebsmotors 130 ist parallel zu der Tretlager-Axialen 50' angeordnet, und ist erheblich näher an der Bolzen-Axialen 90' als an der Tretlager-Axialen 50' angeordnet.

## Patentansprüche

1. Eine Elektrofahrrad-Mittelmotor-Antriebseinheit (40) mit einem Antriebsgehäuse (46), einer das Antriebsgehäuse (46) in Querrichtung durchdringenden Tretlagerwelle (50) und einer hierzu parallelen Abtriebswelle (52),
wobei dem Antriebsgehäuse (46) an mindestens einer Lateralseite der Antriebseinheit (40) und koaxial zu der Tretlager-Axialen (50') ein im Wesentlichen kreisringförmiger Radialklemmring (621,622) zugeordnet ist,
wobei der Radialklemmring (621,622) eine zirkuläre Außen-Klemmfläche (64) aufweist, und
wobei dem Antriebsgehäuse (46) eine separate Drehmomentstütze (90) zugeordnet ist,
**dadurch gekennzeichnet, dass**
der Hebelarm (H) der Drehmomentstütze (90) zu der Tretlager-Axialen (50') mindestens dem 1,5-fachen des Radius (R) des Radialklemmrings (621,622) zu der Tretlager-Axialen (50') entspricht.

2. Die Elektrofahrrad-Mittelmotor-Antriebseinheit (40) nach Anspruch 1, wobei die Außen-Klemmfläche (64) als Außenkonus ausgebildet ist.

3. Die Elektrofahrrad-Mittelmotor-Antriebseinheit (40) nach einem der vorangegangenen Ansprüche, wobei mindestens ein Radialklemmring (621,622) von einer separaten Klemmmutter (63) gebildet ist, die mit ihrem Mutterngewinde (65) in ein korrespondierendes Gegengewinde (66) axial eingeschraubt ist.

4. Die Elektrofahrrad-Mittelmotor-Antriebseinheit (40) nach einem der vorangegangenen Ansprüche, wobei der Radialklemmring (621,622) eine lateral zugängliche Werkzeugansatz-Struktur (67) aufweist.

5. Die Elektrofahrrad-Mittelmotor-Antriebseinheit (40) nach einem der vorangegangenen Ansprüche, wobei die Tretlagerwelle (50) und die Abtriebswelle (52) koaxial zueinander gelagert sind.

6. Die Elektrofahrrad-Mittelmotor-Antriebseinheit (40) nach einem der vorangegangenen Ansprüche , wobei die Drehmomentstütze (90) bolzenartig ausgebildet ist, und wobei die Bolzen-Axiale (90') parallel zur Tretlager-Axialen (50') angeordnet ist.

7. Die Elektrofahrrad-Mittelmotor-Antriebseinheit (40) nach Anspruch 6, wobei die Drehmomentstütze (90) eine vorzugsweise elastische Spannhülse (98) aufweist, deren Außenumfang zum Verspannen in einer korrespondierenden Drehmomentstützen-Aufnahmeöffnung (100) einstellbar ist.

8. Die Elektrofahrrad-Mittelmotor-Antriebseinheit (40) nach einem der vorangegangenen Ansprüche, wobei innerhalb des Antriebsgehäuses (46) ein elektrischer Antriebsmotor (110) angeordnet ist, dessen Motorwelle (132) parallel zur Tretlager-Axialen (50') angeordnet ist, und dessen Motorwelle (132) näher an der Drehmomentstütze (90) als an der Tretlager-Axialen (50') angeordnet ist.

9. Eine Elektrofahrrad-Mittelmotor-Befestigungsanordnung (60) mit einem Fahrradrahmen (12) mit einer rahmenseitigen Mittelmotor-Aufnahmeanordnung (20) und der Elektrofahrrad-Mittelmotor-Antriebseinheit (40) nach einem der vorangegangenen Ansprüche, wobei die Befestigungsanordnung (60) aufweist:
einen einstückig mit dem übrigen Fahrradrahmen (12) und topfartig ausgebildeten Aufnahme-Grundkörper (22), der durch einen separaten Gehäusedeckel (24) verschlossen ist,
wobei der Aufnahme-Grundkörper (22) und/oder der Gehäusedeckel (24) eine Klemmöffnung (70,71) mit einer im Wesentlichen zirkulären Innen-Klemmfläche (32) aufweist, in der die Außen-Klemmfläche (64) des antriebsseitigen Radialklemmrings (621,622) klemmend sitzt.

10. Die Elektrofahrrad-Mittelmotor-Befestigungsanordnung (60) nach dem vorangegangenen Anspruch, wobei die Innen-Klemmfläche (32) von einem separaten Gegen-Klemmring (30) gebildet ist der aus einem anderen Material besteht, als der Aufnahme-Grundkörper (22) und/oder der Gehäusedeckel (24).

11. Die Elektrofahrrad-Mittelmotor-Befestigungsanordnung (60) nach einem der zwei vorangegangenen Ansprüche, wobei die zur Tretlagerwelle (50) koaxial angeordnete Abtriebswelle (52) durch die Klemmöffnung (70) des Aufnahme-Grundkörpers (22) zur Gehäuseaußenseite hindurchragt.

12. Die Elektrofahrrad-Mittelmotor-Befestigungsanordnung (60) nach einem der drei vorangegangenen Ansprüche, wobei der Aufnahme-Grundkörper (22) eine Drehmomentstützen-Aufnahmeöffnung (100) aufweist, durch die die antriebsseitige Drehmomentstütze (90) abgestützt ist.

13. Die Elektrofahrrad-Mittelmotor-Befestigungsanordnung (60) nach einem der vier vorangegangenen Ansprüche, wobei das Antriebsgehäuse (46) eine einen elektrischen Antriebsmotor (110) teilweise einhausenden Motortopf (74) aufweist, der durch eine Topföffnung (120) des Gehäusedeckels (24) zur Gehäuseaußenseite hindurchragt.

## Claims

1. An electric bicycle center motor drive unit (40) having a drive housing (46), a bottom bracket shaft (50) penetrating the drive housing (46) in the transverse direction, and an output shaft (52) parallel thereto,
wherein a substantially annular radial clamping ring (621, 622) is associated with the drive housing (46) on at least one lateral side of the drive unit (40) and coaxially to the bottom bracket axis (50'),
wherein the radial clamping ring (621, 622) has a circular outer clamping surface (64), and
wherein a separate torque support (90) is associated with the drive housing (46), **characterized in that**
the lever arm (H) of the torque support (90) to the bottom bracket axis (50') is equal to at least 1.5 times the radius (R) of the radial clamping ring (621, 622) to the bottom bracket axis (50').

2. The electric bicycle center motor drive unit (40) according to claim 1, wherein the outer clamping surface (64) is formed as an outer cone.

3. The electric bicycle center motor drive unit (40) according to one of the preceding claims, wherein at least one radial clamping ring (621, 622) is defined by a separate clamping nut (63), which is axially screwed with its nut thread (65) into a corresponding mating thread (66).

4. The electric bicycle center motor drive unit (40) according to one of the preceding claims, wherein the radial clamping ring (621, 622) has a laterally accessible tool attachment structure (67).

5. The electric bicycle center motor drive unit (40) according to one of the preceding claims, wherein the bottom bracket shaft (50) and the output shaft (52) are mounted coaxially to one another.

6. The electric bicycle center motor drive unit (40) according to one of the preceding claims, wherein the torque support (90) is formed in the manner of a bolt, and wherein the bolt axis (90') is arranged parallel to the bottom bracket axis (50').

7. The electric bicycle center motor drive unit (40) according to claim 6, wherein the torque support (90) has a preferably elastic clamping sleeve (98), the outer circumference of which is adjustable for clamping in a corresponding torque support receiving opening (100).

8. The electric bicycle center motor drive unit (40) according to one of the preceding claims, wherein an electric drive motor (110) is arranged within the drive housing (46), the motor shaft (132) of which is arranged parallel to the bottom bracket axis (50'), and the motor shaft (132) of which is arranged closer to the torque support (90) than to the bottom bracket axis (50').

9. An electric bicycle center motor fastening arrangement (60) having a bicycle frame (12) with a frame-side center motor receiving arrangement (20) and the electric bicycle center motor drive unit (40) according to one of the preceding claims, wherein the fastening arrangement (60) is provided with:
a pot-shaped receiving base body (22) which is formed integrally with the rest of the bicycle frame (12) and is closed by a separate housing cover (24),
wherein the receiving base body (22) and/or the housing cover (24) has a clamping opening (70, 71) with a substantially circular inner clamping surface (32), in which the outer clamping surface (64) of the drive-side radial clamping ring (621, 622) is seated in a clamping manner.

10. The electric bicycle center motor fastening arrangement (60) according to the preceding claim, wherein the inner clamping surface (32) is formed by a separate mating clamping ring (30), which consists of a different material than the receiving base body (22) and/or the housing cover (24).

11. The electric bicycle center motor fastening arrangement (60) according to one of the two preceding claims, wherein the output shaft (52) arranged coaxially to the bottom bracket shaft (50) projects through the clamping opening (70) of the receiving base body (22) to the housing outer side.

12. The electric bicycle center motor fastening arrangement (60) according to one of the three preceding claims, wherein the receiving base body (22) has a torque support receiving opening (100), through which the drive-side torque support (90) is supported.

13. The electric bicycle center motor fastening arrangement (60) according to one of the four preceding claims, wherein the drive housing (46) has a motor pot (74) partially housing an electric drive motor (110), which motor pot projects through a pot opening (120) of the housing cover (24) to the housing outer side.

## Revendications

1. Une unité d'entraînement à moteur central de bicyclette électrique (40) comprenant un boîtier d'entraînement (46), un arbre de pédalier (50) traversant le boîtier d'entraînement (46) dans la direction transversale et un arbre de sortie (52) parallèle à celui-ci,
dans laquelle un anneau de serrage radial (621, 622) essentiellement en forme d'anneau circulaire est associé au boîtier d'entraînement (46) sur au moins un côté latéral de l'unité d'entraînement (40) et coaxialement à l'axe de pédalier (50'),
dans laquelle l'anneau de serrage radial (621, 622) présente une surface de serrage extérieure circulaire (64), et
dans laquelle un support de couple (90) séparé est associé au boîtier d'entraînement (46),
**caractérisée en ce que**
le bras de levier (H) du support de couple (90) par rapport à l'axe de pédalier (50') est au moins à 1,5 fois le rayon (R) de l'anneau de serrage radial (621, 622) par rapport à l'axe de pédalier (50').

2. L'unité d'entraînement à moteur central de bicyclette électrique (40) selon la revendication 1, dans laquelle la surface de serrage extérieure (64) est réalisée sous forme de cône extérieur.

3. L'unité d'entraînement à moteur central de bicyclette électrique (40) selon l'une des revendications précédentes, dans laquelle au moins un anneau de serrage radial (621, 622) est formé par un écrou de serrage (63) séparé, qui est vissé axialement avec son filetage d'écrou (65) dans un contre-filetage (66) correspondant.

4. L'unité d'entraînement à moteur central de bicyclette électrique (40) selon l'une des revendications précédentes, dans laquelle l'anneau de serrage radial (621, 622) présente une structure d'embout d'outil (67) accessible latéralement.

5. L'unité d'entraînement à moteur central de bicyclette électrique (40) selon l'une des revendications précédentes, dans laquelle l'arbre de pédalier (50) et l'arbre de sortie (52) sont montés coaxialement l'un par rapport à l'autre.

6. L'unité d'entraînement à moteur central de bicyclette électrique (40) selon l'une des revendications précédentes, dans laquelle le support de couple (90) est réalisé sous forme de boulon, et dans laquelle l'axe de boulon (90') est disposé parallèlement à l'axe de pédalier (50').

7. L'unité d'entraînement à moteur central de bicyclette électrique (40) selon la revendication 6, dans laquelle le support de couple (90) présente une douille de serrage (98) de préférence élastique, dont la périphérie extérieure est réglable pour le serrage dans une ouverture de réception de support de couple (100) correspondante.

8. L'unité d'entraînement à moteur central de bicyclette électrique (40) selon l'une des revendications précédentes, dans laquelle un moteur d'entraînement électrique (110) est disposé à l'intérieur du boîtier d'entraînement (46), dont l'arbre de moteur (132) est disposé parallèlement à l'axe de pédalier (50'), et dont l'arbre de moteur (132) est disposé plus près du support de couple (90) que de l'axe de pédalier (50').

9. Un agencement de fixation de moteur central de bicyclette électrique (60) avec un cadre de bicyclette (12) avec un agencement de réception de moteur central côté cadre (20) et l'unité d'entraînement à moteur central de bicyclette électrique (40) selon l'une des revendications précédentes, dans lequel l'agencement de fixation (60) présente :
un corps de base de réception (22) réalisé d'une seule pièce avec le reste du cadre de bicyclette (12) et en forme de pot, qui est fermé par un couvercle de boîtier (24) séparé,
dans lequel le corps de base de réception (22) et/ou le couvercle de boîtier (24) présente une ouverture de serrage (70, 71) avec une surface de serrage intérieure (32) essentiellement circulaire, dans laquelle la surface de serrage extérieure (64) de l'anneau de serrage radial côté entraînement (621, 622) est assise par serrage.

10. L'agencement de fixation de moteur central de bicyclette électrique (60) selon la revendication précédente, dans lequel la surface de serrage intérieure (32) est formée par un contre-anneau de serrage (30) séparé, qui est constitué d'un autre matériau que le corps de base de réception (22) et/ou le couvercle de boîtier (24).

11. L'agencement de fixation de moteur central de bicyclette électrique (60) selon l'une des deux revendications précédentes, dans lequel l'arbre de sortie (52) disposé coaxialement à l'arbre de pédalier (50) fait saillie à travers l'ouverture de serrage (70) du corps de base de réception (22) vers le côté extérieur du boîtier.

12. L'agencement de fixation de moteur central de bicyclette électrique (60) selon l'une des trois revendications précédentes, dans lequel le corps de base de réception (22) présente une ouverture de réception de support de couple (100), à travers laquelle le support de couple côté entraînement (90) est supporté.

13. L'agencement de fixation de moteur central de bicyclette électrique (60) selon l'une des quatre revendications précédentes, dans lequel le boîtier d'entraînement (46) présente un pot de moteur (74) logeant partiellement un moteur d'entraînement électrique (110), qui fait saillie à travers une ouverture de pot (120) du couvercle de boîtier (24) vers le côté extérieur du boîtier.
